# EUROPEAN PATENT APPLICATION

(11) **EP 2 425 970 A1**
(43) Date of publication of application: **07.03.2012**
(21) Application number: 10769215.4
(22) Date of filing: 28.04.2010
(51) Int. Cl.: B32B 27/20, B32B 27/26, B32B 27/30, B32B 7/04, B32B 7/12, B41M 5/00, B41M 5/52

(54) **WATERPROOF SELF-LUMINESCENT AIRBRUSHING FILM**

(30) Priority: 28.04.2009 CN 200910011382
(71) Applicant: Dalian Luminglight Co., Ltd., Liaoning 116025 (CN)
(72) Inventor: XIAO, Zhiguo, Liaoning 116025 (CN); LI, Maolong, Liaoning 116025 (CN); LI, Yingying, Liaoning 116025 (CN); SHAO, Kuiwu, Liaoning 116025 (CN); ZHANG, Hongwei, Liaoning 116025 (CN)
(74) Representative: Böhm, Brigitte
(86) International application number: PCT/CN2010/000579
(87) International publication number: WO 2010/124526

(57) **Abstract**

The invention provides a waterproof self-luminescent spray-painted film with a thickness of 0.150-1.560 mm. The film has, from top to bottom, ink reception layer (1), connection layer (2) and light-storing photo-luminescent film (3); wherein the ink reception layer (1) is prepared by mixing inorganic filler, adhesive, color fixing agent, coupling agent, surfactant, cross-linking agent, fluorescent whitening agent and water at a ratio. The film has good waterproof property, rapid ink-drying, clear image after being ink-jet printed, and high color density. The film is self-luminescent after absorbing external visible light, and is visible and has the illumination function of low lighting intensity in darkness after a pattern or character is printed on the surface of the film. The film can be widely used in various occasions, such as home decoration, hotels, corridors, office buildings, cinemas, warehouses, ship cabins, underpasses and the places in need of large scale printing and high-precision patterns.

## Description

### Technical field

The present invention belongs to the field of chemical technology and relates to surface materials for printing and copying, particularly to a waterproof self-luminescent spray-painted film.

### Background art

Light-storing luminescent films are soft plastic luminescent films, which have high luminescence brightness, long service life. They can be stuck to the surface of various equipments and articles, and thus can be used in home decorations and various public places. Although such light-storing photo-luminescent films have good printing properties on the surface and various patterns can be printed on the surface to achieve substrate luminescence, its application only by printing needs a great amount of manpower and material resources, the waste product rate is very high, and it is very difficult to print complicated, vivid, high precise patterns. Thus, the use of these articles is greatly limited and can not be used in broader field; besides, the wasting is considerable.

Chinese patent CN1544252 discloses a waterproof highlight ink-jet printing medium comprising a support of plastic coated paper base and a waterproof ink reception layer. The support of plastic coated paper base is difficult to prevent penetration of water for a long period, and thus cannot achieve a real waterproof effect. In addition, the printing medium lacks of novelty and has no luminescence effect at night.

Chinese patent CN1641103 discloses a printing photographic paper which comprises a light-storing paper-like film as substrate. The medium is applied by various methods, and the medium is polyethylene resin. It cannot achieve the same printing index as that of a common high grade photographic paper. Moreover, the patent does not describe the final waterproof property.

Chinese patent CN2566305 discloses a self-luminescent photographic paper comprising a light-storing self-luminous film as a substrate. The patent emphasized that the substrate layer is a white coating or a white plastic film and an ink-absorbing layer is applied on the substrate layer. The patent does not describe the formulation and waterproof property of the ink-absorbing layer.

Chinese patent CN2731501 discloses a novel color printing photographic paper. This printing photographic paper comprises a luminescent plastic film as a substrate and a coating for printing. The printing photographic paper has the advantages of good water absorption, permitting saturated print, large absorption capacity. But the patent does not describe its waterproof property.

Thus far, all the printing consuming materials produced according to existing references and technologies have the disadvantages of printing color being not vivid enough, long drying time, poor waterproof, and narrow application scope.

### Summary of the Invention

The object of the present invention is to provide a waterproof self-luminescent spray-painted film having good waterproof, rapid ink drying, clear image after being ink-jet printed, high color density, good luminescence and good image color rendition effect.

The technical solution of the invention is: a waterproof self-luminescent spray-painted film comprising, from top to bottom, an ink reception layer, a connection layer and a light-storing photo-luminescent film. The waterproof self-luminescent spray-painted film has a thickness of 0.150 to 1.560 mm. The ink reception layer has a thickness of 0.008 to 0.150 mm. The components of the ink reception layer and their weight percents are as follows: inorganic filler 5.0 to 30.0%, adhesive 0.5 to 3.0%, color fixing agent 5.0 to 30.0%, coupling agent 0.1 to 2.0%, surfactant 0.0 to 5.0%, cross-linking agent 0.1 to 1.0%, fluorescent whitening agent 0.0 to 0.1 %, and balance water. The connection layer has a thickness of 0.002 to 0.020 mm and consists of a water-soluble polymer. The light-storing photo-luminescent film is a plastic film comprising light-storing luminescent materials, and has a thickness of 0.140 to 1.350 mm. The light-storing luminescent materials are luminescent materials of silicates, aluminates, sulfides or mixtures thereof activated by various ions. The ink reception layer and light-storing photo-luminescent film are bonded together via the connection layer, and form a semitransparent coating with good ink absorption on the surface of photo-luminescent layer, so that the light-storing photo-luminescent film can show its luminescence property through the ink reception layer, to achieve image representation and luminescence property.

The inorganic filler in the ink reception layer is one to three substances selected from the group consisting of alumina, silica, aluminum hydroxide, magnesium hydroxide, calcium carbonate, barium carbonate and magnesium carbonate. The inorganic filler has a particle size of 4000 to100000 nanometer and a specific surface area of 120 to 220 m²/g.

The adhesive is polyvinyl alcohol, polyvinyl acetate, glutin or cellulose.

The color fixing agent is quaternary ammonium salt cationic color fixing agent dimethyldiallylammonium chloride, amine aldehyde resin type dicyandiamide formaldehyde polymer color fixing agent Y, M; polyamine condensate color fixing agent LA; phenolic condensate cross-linking color fixing agent DE; cross-linking color fixing agent Indosol CR.

The coupling agent is a silane coupling agent selected from the group consisting of 3-aminopropyltriethoxysilane, 3-glycidoxypropylmethyldiethoxysilane, 3-glycidoxypropyltrimethoxysilane or 2-(3,4-epoxycyclohexyl)ethyltrimethoxysilane.

The cross-linking agent is selected from the group consisting of boric acid, borax, borate, glutaraldehyde and formaldehyde.

The constituent in connection layer is polyvinyl acetate, polyvinyl alcohol, aqueous polyurethane, glutin or cellulose.

The inorganic filler is preferably one to three substances selected from the group consisting of alumina, aluminum hydroxide and silica.

The adhesive is preferably polyvinyl alcohol.

The color fixing agent is preferably dimethyldiallylammonium chloride.

The coupling agent is preferably 2-(3,4-epoxycyclohexyl)ethyltrimethoxysilane.

The cross-linking agent is preferably a mixture of boric acid and borax.

The water-soluble polymer is preferably polyvinyl acetate.

The surfactant can promote the dispersion of the inorganic filler and improve the surface condition of the ink reception layer. The surfactant may be anionic surfactant such as stearic acid, sodium dodecyl benzene sulfonate; cationic surfactant such as quaternary ammonium compound; zwitterionic surfactant such as lecithin, amino acid type, betaine type; nonionic surfactant such as fatty glyceride, fatty sorbitan (Span), polysorbate (Tween), polyoxyethylene type, polyoxyethylene-polyoxypropylene copolymer.

The fluorescent whitening agent may be diphenylethene type, coumarin type, pyrazoline type, benzoxazine type, phthalimide type. The fluorescent whitening agent is added to improve the whiteness of the surface of the self-luminescent spray-painted film so that it can reflect the color rendition of the spray-painted image.

The light-storing photo-luminescent film comprises light-storing luminescent materials. The light-storing luminescent materials are luminescent materials of silicates, aluminates, sulfides or mixtures thereof activated by various ions. Different luminescent materials are selected to achieve different self-luminescence colors of the self-luminescent spray-painted film.

The fabrication process of the waterproof self-luminescent spray-painted film comprises the steps of:
1) adding water into adhesive under stirring for dissolving homogenously, to prepare an aqueous solution with a concentration of 10% by mass;
2) adding inorganic filler, color fixing agent, coupling agent, surfactant, cross-linking agent, and fluorescent whitening agent into water and mixing homogenously, dispersing at a rate of 500 to 4000 r/min for 0.5 to 8 hours;
3) slowly adding the aqueous solution of adhesive, stirring continuously at a rate of 500 to 4000 r/min for 0.1 to 3 hours, resting and defoaming for use;
4) applying the connection layer and the ink reception layer on the surface of light-storing photo-luminescent film successively by doctor coating, roll coating, dip coating, wave flow extrusion, printing, cast coating or spray coating, then drying in a drying oven at 25 to 150°C for 1 to 10 minutes to obtain a product.

The coating thickness of the final ink reception layer is 0.008 to 0.150 mm, based on the thickness of dry film. The thickness of final waterproof self-luminescent spray-painted film is 0.150 to 1.560 mm.

The waterproof self-luminescent spray-painted film produced by the processes according to the present invention has the advantages of traditional light-storing photo-luminescent film; moreover, since the water-proof PVC material luminescent film is used as the substrate, and the main resin in the ink reception layer (i.e., water-soluble polymer of adhesive treated with cross-linking agent) forms a dense waterproof tri-dimensional network in the structure so that the waterproof self-luminescent spray-painted film achieves real waterproof, and has the advantages of good waterproof, rapid ink drying, clear image after being ink-jet printed, high color density, self-luminescence in darkness after absorbing light, good color rendition effect, true image color and so on. The light-storing photo-luminescent film products can be widely used in various occasions, such as home decoration, hotels, corridors, office buildings, cinemas, warehouses, ship cabins, underpasses and the places in need of large scale printing and high-precision patterns.

### Description of the drawings

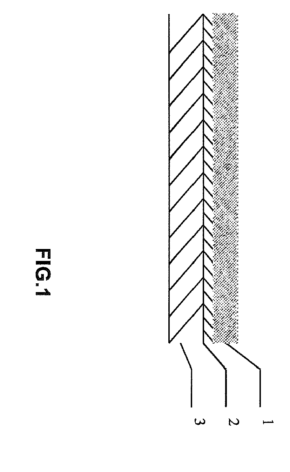

Figure 1 is schematic drawing of the waterproof self-luminescent spray-painted film, in which:
   - 1: ink reception layer;
   - 2: connection layer;
   - 3: light-storing photo-luminescent film.

### Embodiments

### Example 1

Light-storing photo-luminescent film: a plastic film containing aluminate type light-storing luminescent material emitting yellow-green light.

The formulation of ink reception layer:

| | |
|---|---|
| Inorganic filler aluminum hydroxide | 27.4% |
| Adhesive polyvinyl alcohol | 2.7% |
| Color fixing agent dimethyldiallylammonium chloride | 11.7% |
| Coupling agent 3-aminopropyltriethoxysilane | 1.5% |
| Surfactant polyoxyethylene nonylphenyl ether | 0.9% |
| Cross-linking agent boric acid | 0.9% |
| Fluorescent whitening agent TA (diphenylethene type) | 0.1% |
| Water | 54.8% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 2000 r/min for 4 hours;
3) slowly adding the aqueous solution of adhesive, stirring continuously at a rate of 2000 r/min for 1 hour, resting and defoaming for use;
4) applying the connection layer and the ink reception layer on the surface of light-storing photo-luminescent film successively by doctor coating, drying in a drying oven at 50°C for 3 minutes to obtain a product.

Wherein the thickness of the ink reception layer is 0.03 mm; the thickness of final self-luminescent spray-painted film product is 0.35 mm; and wherein the aluminum hydroxide has a particle size of 45000 nanometers and a specific surface area of 150 m²/g. The properties of the product were determined (as shown in following table).

### Example 2

Light-storing photo-luminescent film: a plastic film containing aluminate type light-storing luminescent material emitting yellow-green light.

The formulation of ink reception layer:

| | |
|---|---|
| Inorganic filler aluminum hydroxide | 13.7% |
| silica | 13.7% |
| Adhesive polyvinyl alcohol | 2.75% |
| Color fixing agent dimethyldiallylammonium chloride | 11.65% |
| Coupling agent 3-glycidoxypropylmethyldiethyoxysilane | 1.46% |
| Cationic Surfactant benzalkonium chloride | 0.95% |
| Cross-linking agent boric acid | 0.9% |
| Fluorescent whitening agent TA (diphenylethene type) | 0.09% |
| Water | 54.8% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 1000 r/min for 4 hours;
3) slowly adding the aqueous solution of adhesive, stirring continuously at a rate of 1000 r/min for 1 hour, resting and defoaming for use;
4) applying the connection layer and the ink reception layer on the surface of light-storing photo-luminescent film successively by roll coating, drying in a drying oven at 50°C for 3 minutes to obtain a product.

Wherein the thickness of the ink reception layer is 0.025 mm; the thickness of final self-luminescent spray-painted film product is 0.3 mm; and wherein the aluminum hydroxide and silica each have a particle size of 100000 nanometers and a specific surface area of 190 m²/g. The properties of the product were determined (as shown in following table).

### Example 3

Light-storing photo-luminescent film: a plastic film containing aluminate type light-storing luminescent material emitting blue-green light The formulation of ink reception layer:

| | |
|---|---|
| Inorganic filler silica | 27.7% |
| Adhesive | 2.75% |
| Color fixing agent dimethyldiallylammonium chloride | 11.9% |
| Coupling agent 3-glycidoxypropylmethyldiethyoxysilane | 1.5% |
| Cross-linking agent glutaraldehyde | 0.9% |
| Water | 55.25% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 3000 r/min for 4 hours;
3) slowly adding the aqueous solution of adhesive, stirring continuously at a rate of 3000 r/min for 1 hour, resting and defoaming for use;
4) applying the connection layer and the ink reception layer on the surface of light-storing photo-luminescent film successively by wave flow extrusion, drying in a drying oven at 50°C for 3 minutes to obtain a product.

Wherein the thickness of the ink reception layer is 0.03 mm; the thickness of final self-luminescent spray-painted film product is 0.35 mm; and wherein the silica has a particle size of 50000 nanometers and a specific surface area of 140 m²/g. The properties of the product were determined (as shown in following table).

### Example 4

Light-storing photo-luminescent film: a plastic film containing aluminate type light-storing luminescent material emitting yellow-green light.

The formulation of ink reception layer:

| | |
|---|---|
| Inorganic filler alumina | 28.18% |
| Adhesive polyvinyl alcohol | 1.46% |
| Color fixing agent color fixing agent Y | 12% |
| Coupling agent 3-glycidoxypropylmethyldiethyoxysilane | 1.5% |
| Cross-linking agent boric acid | 0.47% |
| Water | 56.4% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 2000 r/min for 4 hours;
3) slowly adding the aqueous solution of adhesive, stirring continuously at a rate of 2000 r/min for 1 hour, resting and defoaming for use;
4) applying the connection layer and the ink reception layer on the surface of light-storing photo-luminescent film successively by dip coating, drying in a drying oven at 50°C for 3 minutes to obtain a product.

Wherein the thickness of the ink reception layer is 0.025 mm; the thickness of final self-luminescent spray-painted film product is 0.30 mm; and wherein the alumina has a particle size of 45000 nanometers and a specific surface area of 156 m²/g. The properties of the product were determined (as shown in following table).

### Example 5

Light-storing photo-luminescent film: a plastic film containing silicate type light-storing luminescent material emitting blue light.

The formulation of ink reception layer:

| | |
|---|---|
| Inorganic filler alumina | 13.7% |
| silica | 13.7% |
| Adhesive polyvinyl alcohol | 2.75% |
| Color fixing agent color fixing agent Y | 11.7% |
| Coupling agent 2-(3,4-epoxycyclohexyl)ethyltrimethylsilane | 1.46% |
| Nonionic surfactant alkyl alcohol polyoxyethylene ether phosphate | 0.9% |
| Cross-linking agent boric acid | 0.9% |
| Fluorescent whitening agent AD (pyrazoline type) | 0.09% |
| Water | 54.8% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 2000 r/min for 4 hours;
3) slowly adding the aqueous solution of adhesive, stirring continuously at a rate of 2000 r/min for 1 hour, resting and defoaming for use;
4) applying the connection layer and the ink reception layer on the surface of light-storing photo-luminescent film successively by cast coating, drying in a drying oven at 50°C for 3 minutes to obtain a product.

Wherein the thickness of the ink reception layer is 0.03 mm; the thickness of final self-luminescent spray-painted film product is 0.35 mm; and wherein the alumina and silica each have a particle size of 45000 nanometers and a specific surface area of 145 m²/g. The properties of the product were determined (as shown in following table).

### Example 6

Light-storing photo-luminescent film: a plastic film containing sulfide light-storing luminescent material emitting red light.

The formulation of ink reception layer:

| | |
|---|---|
| Inorganic filler alumina | 13.7% |
| aluminum hydroxide | 13.7% |
| Adhesive polyvinyl alcohol | 2.74% |
| Color fixing agent LA | 11.7% |
| Coupling agent 3-glycidoxypropylmethyldiethyoxysilane | 1.46% |
| Nonionic surfactant alkyl alcohol polyoxyethylene ether phosphate | 0.9% |
| Cross-linking agent boric acid | 0.9% |
| Fluorescent whitening agent AD (pyrazoline type) | 0.09% |
| Water | 54.8% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 2500 r/min for 4 hours;
3) slowly adding the aqueous solution of adhesive, stirring continuously at a rate of 3000 r/min for 1 hour, resting and defoaming for use;
4) applying the connection layer and the ink reception layer on the surface of light-storing photo-luminescent film successively by printing, drying in a drying oven at 50°C for 6 minutes to obtain a product.

Wherein the thickness of the ink reception layer is 0.008 mm; the thickness of final self-luminescent spray-painted film product is 0.09 mm; and wherein the alumina and aluminum hydroxide each have a particle size of 55000 nanometers and a specific surface area of 130 m²/g. The properties of the product were determined (as shown in following table).

### Example 7

Light-storing photo-luminescent film: a plastic film containing aluminate light-storing luminescent material emitting yellow-green light.

The formulation of ink reception layer:

| | |
|---|---|
| Inorganic filler alumina | 9.13% |
| silica | 9.13% |
| aluminum hydroxide | 9.13% |
| Adhesive polyvinyl alcohol | 2.76% |
| Color fixing agent LA | 11.7% |
| Coupling agent 3-glycidoxypropylmethyldiethyoxysilane | 1.46% |
| Cationic surfactant dodecyldimethylbenzylammonium chloride | 0.9% |
| Cross-linking agent boric acid | 0.9% |
| Fluorescent whitening agent AD (pyrazoline type) | 0.09% |
| Water | 54.9% |

### Operation:

1) adding water into the adhesive under stirring for dissolving homogenously to prepare an aqueous solution of adhesive with a concentration of 10% by mass;
2) adding inorganic filler, color fixing agent, coupling agent, surfactant, cross-linking agent, and fluorescent whitening agent into water and mixing homogenously, dispersing at a rate of 1500 r/min for 8 hours;
3) slowly adding the aqueous solution of adhesive, stirring continuously at a rate of 1500 r/min for 3 hours, resting and defoaming for use;
4) applying the connection layer and the ink reception layer on the surface of light-storing photo-luminescent film successively by spray coating, drying in a drying oven at 50°C for 3 minutes to obtain a product.

Wherein the thickness of the ink reception layer is 0.04 mm; the thickness of final self-luminescent spray-painted film product is 1.5 mm; and wherein the aluminum hydroxide and silica each have a particle size of 60000 nanometers and a specific surface area of 160 m²/g. The properties of the product were determined (as shown in following table).

### Example 8

Light-storing photo-luminescent film: a plastic film containing silicate light-storing luminescent material emitting blue light.

The formulation of ink reception layer:

| | |
|---|---|
| Inorganic filler alumina | 30% |
| Adhesive glutin | 3% |
| Cross-linking color fixing agent DE | 30% |
| Coupling agent 3-glycidoxypropylmethyldiethyoxysilane | 2% |
| Cationic surfactant dodecyldimethylbenzylammonium chloride | 5% |
| Cross-linking agent boric acid | 1 % |
| Fluorescent whitening agent AD (pyrazoline type) | 0.1 % |
| Water | 28.9% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 4000 r/min for 0.5 hours;
3) slowly adding the aqueous solution of adhesive, stirring continuously at a rate of 4000 r/min for 0.1 hours, resting and defoaming for use;
4) applying the connection layer and the ink reception layer on the surface of light-storing photo-luminescent film successively by cast coating, drying in a drying oven at 25°C for 10 minutes to obtain a product.

Wherein the thickness of the ink reception layer is 0.02 mm; the thickness of final self-luminescent spray-painted film product is 1 mm; and wherein the alumina has a particle size of 70000 nanometers and a specific surface area of 180 m²/g. The properties of the product were determined (as shown in following table).

### Example 9

Light-storing photo-luminescent film: a plastic film containing sulfide light-storing luminescent material emitting red light.

The formulation of ink reception layer:

| | |
|---|---|
| Inorganic filler magnesium hydroxide | 5% |
| Adhesive polyvinyl acetate | 0.5% |
| Cross-linking color fixing agent DE | 5% |
| Coupling agent 3-aminopropyltriethoxysilane | 0.1% |
| Cross-linking agent borax | 0.1% |
| Water | 89.3% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 500 r/min for 8 hours;
3) slowly adding the aqueous solution of adhesive, stirring continuously at a rate of 500 r/min for 3 hours, resting and defoaming for use;
4) applying the connection layer and the ink reception layer on the surface of light-storing photo-luminescent film successively by dip coating, drying in a drying oven at 150°C for 1 minutes to obtain a product.

Wherein the thickness of the ink reception layer is 0.035 mm; the thickness of final self-luminescent spray-painted film product is 1.2 mm; and wherein the magnesium hydroxide has a particle size of 80000 nanometers and a specific surface area of 200 m²/g. The properties of the product were determined (as shown in following table).

### Example 10

Light-storing photo-luminescent film: a plastic film containing aluminate light-storing luminescent material emitting yellow-green light.

The formulation of ink reception layer:

| | |
|---|---|
| Inorganic filler calcium carbonate | 15% |
| Adhesive cellulose | 1.5% |
| Color fixing agent M | 15% |
| Coupling agent 3-aminopropyltriethoxysilane | 1.5% |
| Cross-linking agent borate | 0.5% |
| Cationic surfactant dodecyldimethylbenzylammonium chloride | 2.5% |
| Fluorescent whitening agent AD (pyrazoline type) | 0.05% |
| Water | 63.95% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 2000 r/min for 4 hours;
3) slowly adding the aqueous solution of adhesive, stirring continuously at a rate of 2000 r/min for 2 hours, resting and defoaming for use;
4) applying the connection layer and the ink reception layer on the surface of light-storing photo-luminescent film successively by air doctor coating, drying in a drying oven at 50°C for 3 minutes to obtain a product.

Wherein the thickness of the ink reception layer is 0.01 mm; the thickness of final self-luminescent spray-painted film product is 0.35 mm; and wherein the calcium carbonate has a particle size of 90000 nanometers and a specific surface area of 220 m²/g. The properties of the product were determined (as shown in following table).

### Example 11

Light-storing photo-luminescent film: a plastic film containing aluminate light-storing luminescent material emitting yellow-green light.

The formulation of ink reception layer:

| | |
|---|---|
| Inorganic filler barium carbonate | 10% |
| magnesium carbonate | 10% |
| Adhesive polyvinyl alcohol | 2% |
| Color fixing agent (Indosol CR) | 20% |
| Coupling agent 3-glycidoxypropylmethyldiethyoxysilane | 1.5% |
| Cross-linking agent formaldehyde | 0.5% |
| Fluorescent whitening agent AD (pyrazoline type) | 0.05% |
| Water | 55.95% |

### Operation:

1) adding water into the adhesive under stirring for dissolving homogenously to prepare an aqueous solution of adhesive with a concentration of 10% by mass;
2)adding inorganic filler, color fixing agent, coupling agent, surfactant, cross-linking agent, and fluorescent whitening agent into water and mixing homogenously, dispersing at a rate of 2000 r/min for 4 hours;
3) slowly adding the aqueous solution of adhesive, stirring continuously at a rate of 2000 r/min for 1 hour, resting and defoaming for use;
4) applying the connection layer and the ink reception layer on the surface of light-storing photo-luminescent film successively by flow casting, drying in a drying oven at 50°C for 3 minutes to obtain a product.

Wherein the thickness of the ink reception layer is 0.03 mm; the thickness of final self-luminescent spray-painted film product is 0.5 mm; and wherein the barium carbonate and magnesium carbonate each have a particle size of 40000 nanometers and a specific surface area of 120 m²/g. The properties of the product were determined (as shown in following table).

| | Luminescent color | Ink absorption property | Waterproof property | bleeding | Glossiness |
|---|---|---|---|---|---|
| Example 1 | Yellow-green | A | A | A | 52 |
| Example 2 | Yellow-green | A | A | A | 52 |
| Example 3 | Blue-green | A | A | A | 52 |
| Example 4 | Yellow-green | A | A | A | 25 |
| Example 5 | Blue | A | A | A | 52 |
| Example 6 | Red | A | A | A | 52 |
| Example 7 | Yellow-green | A | A | A | 52 |
| Example 8 | Blue | B | A | B | 52 |
| Example 9 | Red | C | A | C | 25 |
| Example 10 | Yellow-green | B | B | C | 25 |
| Example 11 | Yellow-green | B | C | C | 25 |

### Evaluation methods:

### Ink absorption property:

Portrait photos were printed by an EPSONR270 printer to test six colors of yellow, magenta, cyan, black, blue, light blue. The printed pictures were overlapped with white duplicating papers and then compressed gently. The degree of printing ink quantity on the white papers was observed with naked eye. The printer was designed to perform printing with an ink of aqueous dye.
A: no stack
B: slight stack
C: stack

### Waterproof property:

Four color block of 1.5cm×1.5cm with colors of 100% cyan, 100% magenta, 100% yellow, 100% black were printed by an EPSONR270 printer, washed with flowing water under a water faucet for 30 minutes, gently erased with hand. The staining circumstance of the surface was observed.
A: the surface was not stained;
B: the surface was stained slightly;
C: the surface was stained.

### Bleeding:

Four color blocks of 2.5cmx2.5cm with colors of 100% cyan, 100% magenta, 100% yellow, 100% black were printed, two groups white lines, transverse and perpendicular respectively, were distributed on each color block; each group of the lines consist of 7 fine lines with different widths, the width from thin to wide being 1, 2, 4, 6, 8, 10, and 12 successively in pixel unit. After the color blocks were printed by an EPSONR270 printer, the printed pictures were put in aging oven (at a temperature of 50°C and humidity of 80%) for 72 hours. The white lines were observed.
A: 1, 2 clear
B: 4, 6 clear
C: 8, 10, 12 clear

### Glossiness:

The Glossiness was tested by glossiness instrument. Since the glossiness of paper samples was different in perpendicular and transverse directions, each paper sample was measured in 4 different directions, the sample was rotated an angle of 45 degree after each measurement. The value of the glossiness was the average of four measurements.

## Claims

1. A waterproof self-luminescent spray-painted film comprising, from top to bottom, an ink reception layer, a connection layer and a light-storing photo-luminescent film, **characterized in that** the waterproof self-luminescent spray-painted film has a thickness of 0.150 to 1.560 mm, the ink reception layer has a thickness of 0.008 to 0.150 mm; the components of the ink reception layer and their weight percents are as follows: inorganic filler 5.0 to 30.0%, adhesive 0.5 to 3.0%, color fixing agent 5.0 to 30.0%, coupling agent 0.1 to 2.0%, surfactant 0.0 to 5.0%, cross-linking agent 0.1 to 1.0%, fluorescent whitening agent 0.0 to 0.1%, and balance water;
wherein the connection layer consists of a water-soluble polymer and has a thickness of 0.002 to 0.020 mm; the light-storing photo-luminescent film is a plastic film containing light-storing luminescent materials and has a thickness of 0.140 to 1.350 mm, the light-storing luminescent materials are luminescent materials of silicates, aluminates, sulfides or mixtures thereof activated by various ions.

2. The waterproof self-luminescent spray-painted film according to claim 1, **characterized in that** the inorganic filler is one to three substances selected from the group consisting of alumina, silica, aluminum hydroxide, magnesium hydroxide, calcium carbonate, barium carbonate and magnesium carbonate; and the inorganic filler has a particle size of 4000 to 100000 nanometer and a specific surface area of 120 to 220 m²/g.

3. The waterproof self-luminescent spray-painted film according to claim 1, **characterized in that** the adhesive is polyvinyl alcohol, polyvinyl acetate, glutin or cellulose.

4. The waterproof self-luminescent spray-painted film according to claim 1, **characterized in that** the color fixing agent is quaternary ammonium salt cationic color fixing agent dimethyldiallylammonium chloride, amine aldehyde resin type dicyandiamide formaldehyde polymer color fixing agent Y, amine aldehyde resin type dicyandiamide formaldehyde polymer color fixing agent M, polyamine condensate color fixing agent LA, phenolic condensate cross-linking color fixing agent DE, or cross-linking color fixing agent Indosol CR.

5. The waterproof self-luminescent spray-painted film according to claim 1, **characterized in that** the coupling agent is a silane coupling agent selected from the group consisting of 3-aminopropyltriethoxysilane, 3-glycidoxypropylmethyldiethyoxysilane, 3-glycidoxypropyltrimethoxysilane or 2-(3,4-epoxycyclohexyl)ethyltrimethylsilane.

6. The waterproof self-luminescent spray-painted film according to claim 1, **characterized in that** cross-linking agent is boric acid, borax, borate, glutaraldehyde or formaldehyde.

7. The waterproof self-luminescent spray-painted film according to claim 1, **characterized in that** the water-soluble polymer is polyvinyl acetate, polyvinyl alcohol, aqueous polyurethane, glutin or cellulose.

8. The waterproof self-luminescent spray-painted film according to claim 1 or 2, **characterized in that** the inorganic filler is one to three substances selected from the group consisting of alumina, aluminum hydroxide and silica.

9. The waterproof self-luminescent spray-painted film according to claim 1 or 3, **characterized in that** the adhesive is polyvinyl alcohol.

10. The waterproof self-luminescent spray-painted film according to claim 1 or 4, **characterized in that** the color fixing agent is dimethyldiallylammonium chloride.

11. The waterproof self-luminescent spray-painted film according to claim 1 or 5, **characterized in that** the coupling agent is 2-(3,4-epoxycyclohexyl)-ethyltrimethoxysilane.

12. The waterproof self-luminescent spray-painted film according to claim 1 or 6, **characterized in that** the cross-linking agent is a mixture of boric acid and borax.

13. The waterproof self-luminescent spray-painted film according to claim 1 or 7, **characterized in that** the water-soluble polymer is polyvinyl acetate.

14. Process for fabricating the waterproof self-luminescent spray-painted film according to claim 1, comprising the steps of:
1) adding water into adhesive under stirring for dissolving homogenously, to prepare an aqueous solution with a concentration of 10% by mass;
2) adding inorganic filler, color fixing agent, coupling agent, surfactant, cross-linking agent, and fluorescent whitening agent into water and mixing homogenously, dispersing at a rate of 500-4000 r/min for 0.5-8 hours;
3) slowly adding the aqueous solution of adhesive, stirring continuously at a rate of 500-4000 r/min for 0.1-3 hours, resting and defoaming for use;
4) applying the connection layer and the ink reception layer on the surface of the light-storing photo-luminescent film successively by doctor coating, roll coating, dip coating, wave flow extrusion, printing, cast coating or spray coating, then drying in a drying oven at 25-150°C for 1-10 minutes to obtain a product.
